# EUROPEAN PATENT APPLICATION

(11) **EP 0 948 115 A2**
(43) Date of publication of application: **06.10.1999**
(21) Application number: 99400765.6
(22) Date of filing: 30.03.1999
(51) Int. Cl.: H02K 5/15, H02K 5/00, H02K 5/14

(54) **Housing of electric motor**

(30) Priority: 30.03.1998 JP 10196998
(71) Applicant: Mitsuba Corporation, Kiryu-shi, Gunma (JP)
(72) Inventor: Uehara, Shuji, Gunma (JP); Ito, Katsutoshi, Nitta-gun, Gunma (JP); Takebe, Yasuhiro, Gunma (JP); Hiruma, Hiroshi, Gunma (JP)
(74) Representative: Hud, Robert

(57) **Abstract**

The invention make it possible to positively secure an electric motor housing, which is composed of a yoke and a front bracket, to a body by using the same mounting tabs for fixing the yoke and the front bracket also for fixing the housing to the body.

A front bracket mounting tab 4d and a yoke mounting tab 3d are temporarily fixed using retaining metal fixtures 14 and 15, and the temporarily fixed assembly is screwed to be secured to a body by abutting the retaining metal fixtures 14 and 15 against a body bracket 17. The retaining metal fixtures 14 and 15 are formed at positions away from bolts heads 16a that are inserted from the yoke 3 side so as to prevent crimped surface portions 14c and 15c of engaging portions 14b and 15b, which jut out toward the yoke 3, from interfering with the bolt heads 16a. Further, distal end surfaces 14e and 15e of bosses 14d and 15d are configured not to come in contact with the outer peripheral edges of yoke through holes 3e.

## Description

The present invention relates to the technical field of a housing of an electric motor constituting electrical equipment mounted on a vehicle or the like.

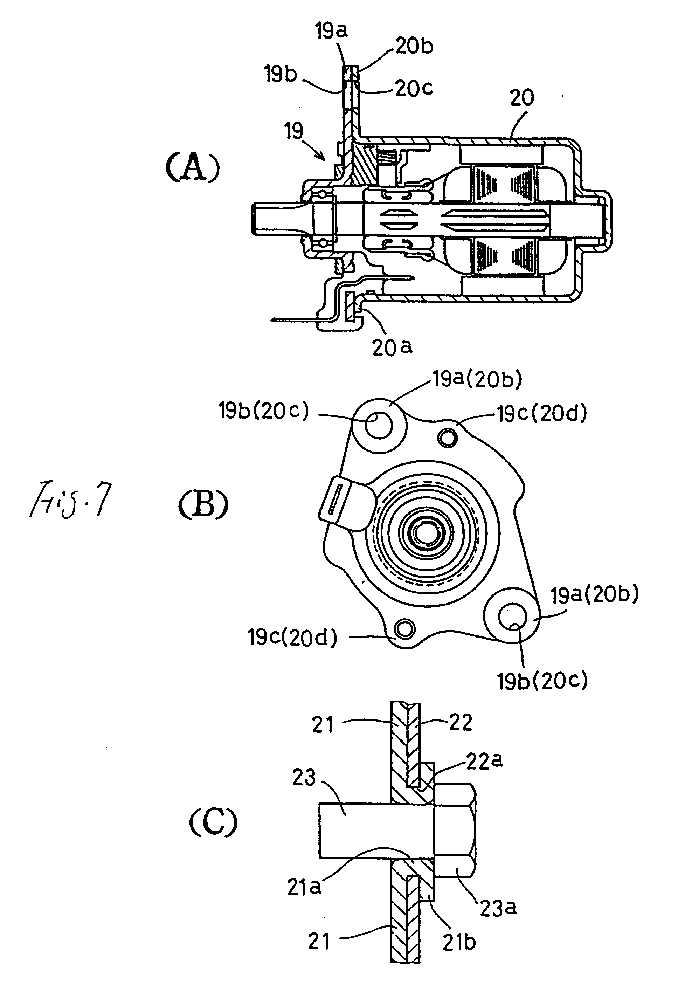

Generally speaking, as this type of an electric motor, there is one in which a housing thereof is composed of a cylindrical yoke and a front bracket which is attached in a sealed manner to a flange formed at the opening end portion of the yoke and in which an output shaft of the electric motor is inserted and projects therefrom. To interlock and secure such an electric motor to an actuator of a body, there has been known, for example, a securing means in which a pair of body mounting tabs 19a and 20b are integrally formed on the outside diameter sides of a front bracket 19 and a flange 20a of a yoke 20, respectively, in the circumferential direction as shown in Figs. 7 (A) and (B), and the securing means is secured to a body by a bolt via through holes 19b and 20c provided in the body mounting tabs 19a and 20b, respectively.

Incidentally, an electric motor is generally factory-shipped in a state where it has been incorporated beforehand in a housing composed of a yoke and a front bracket, and the factory-shipped electric motor is connected and interlocked to an actuator of a body available in various types that is located at other place. For this reason, in the conventional electric motor, the yoke 20 and the front bracket 19 have been fixed to prevent the electric motor assembly from being damaged when shipped out from a factory; hence, it has been necessary to separately form mounting tabs 20d and 19c, which are for fixing in advance the yoke 20 and the front bracket 19, at different locations from those of the body mounting tabs 20b and 19a. This has been posing a problem in that the outside diameters of the yoke flange 20a and the front bracket 19 inevitably become large, sacrificing a compact design of the assembly.

To solve the above problem, it has been proposed, as shown in Fig. 7 (C), to form a cylindrical boss 21a inserted in a through hole 22a, which is formed in a yoke flange 22, on a front bracket 21, crimp the distal end of the inserted boss 21a to fix the front bracket 21 and the yoke flange 22, then fasten and secure the assembly to a body via a bolt 23 inserted in the boss 21a so that the position where the front bracket 21 and the yoke flange 22 are fixed is identical to the position where they are fastened to the body.

In this structure, however, a bolt head 23a uses a crimped surface 21b, which is uneven, as its bearing surface. This has been posing a problem in that a stable fastening force cannot be obtained. There has been another problem: if the crimping has been done loosely that the yoke flange 22 rattles, it would be required to tighten the bolt to crush and deform the crimped surface 21b so as to push the yoke flange 22 by the crimped surface 21b; however, it is virtually difficult to do this by tightening the bolt to eliminate the play. These are the problems to be solved by the present invention.

In view of the above, the present invention has been made to solve the problems. According to the present invention, there is provided a housing of an electric motor composed of a cylindrical yoke and a front bracket abutted against a flange formed at an opening end portion of the yoke, wherein: through holes are provided in mounting tabs formed on the flange and the front bracket such that they are abutted and opposed against each other; and a retaining metal fixture is applied to the mounting tab of the front bracket, a locking portion formed such that it projects from the retaining metal fixtures is crimped at the mounting tab of the yoke to temporarily fix both mounting tabs, and the mounting tabs are secured by bolts to a body with the retaining metal fixture located between the temporarily fixed mounting tabs and the body thereby to fasten the housing to the body via the bolts inserted in the through holes from a yoke side.

With this arrangement, robust fixation can be secured although the same mounting tabs are used for fixing the housing and also for fixing the electric motor to the body.

In this structure, the locking portion in accordance with the present invention is crimped at a location free from heads of the bolts inserted in the through holes.

Further in this structure, the retaining metal fixture in accordance with the present invention may be provided with a cylindrical boss fitted in the through hole of the mounting tab of the front bracket, the inside diameter of the boss may be larger than that of the through hole of the mounting tab of the yoke, and the distal end surface of the boss may be formed to be opposed to the outer peripheral edge of the yoke through hole with a predetermined distance provided therebetween.

Further in this structure, at least one protuberance may be formed on the front bracket in accordance with the present invention, the protuberance being nearly flush with the retaining metal fixture installed to the mounting tab.

To afford a clearer understanding of the invention, an embodiment thereof will now be described in conjunction with the attached drawings in which :

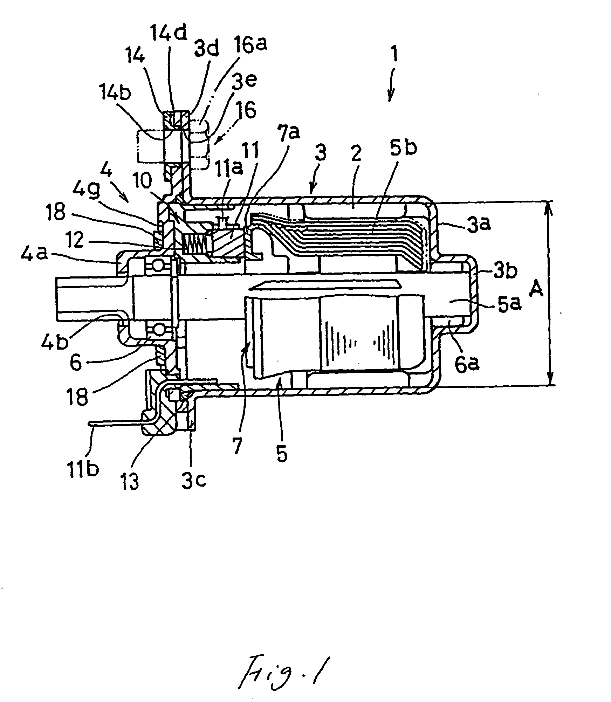

Figure 1 is a partly cut-away sectional view showing an electric motor ;

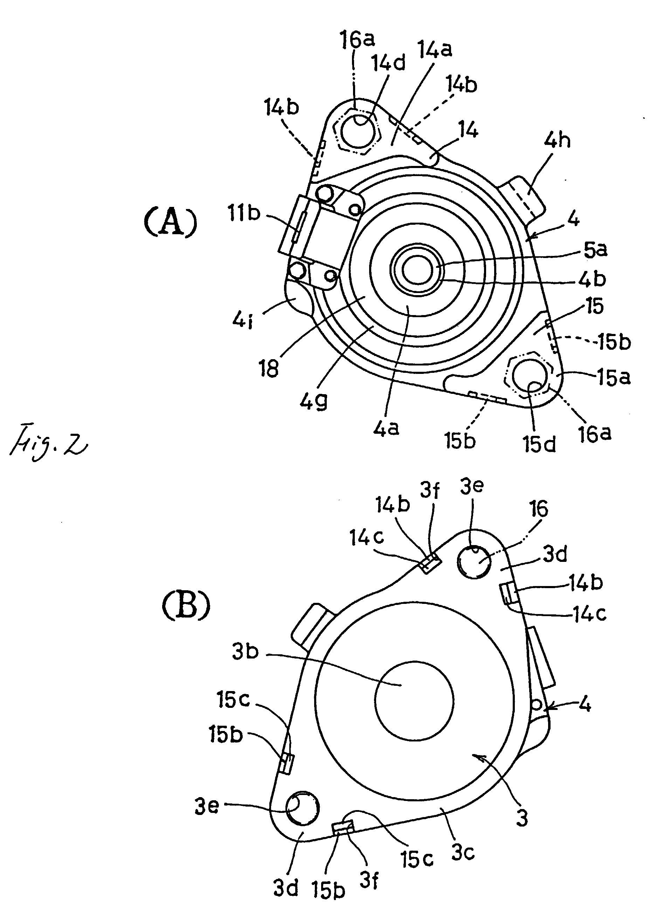

Figures 2 (A) and (B) are a left side view and a right side view, respectively, of the electric motor shown in Fig. 1 ;

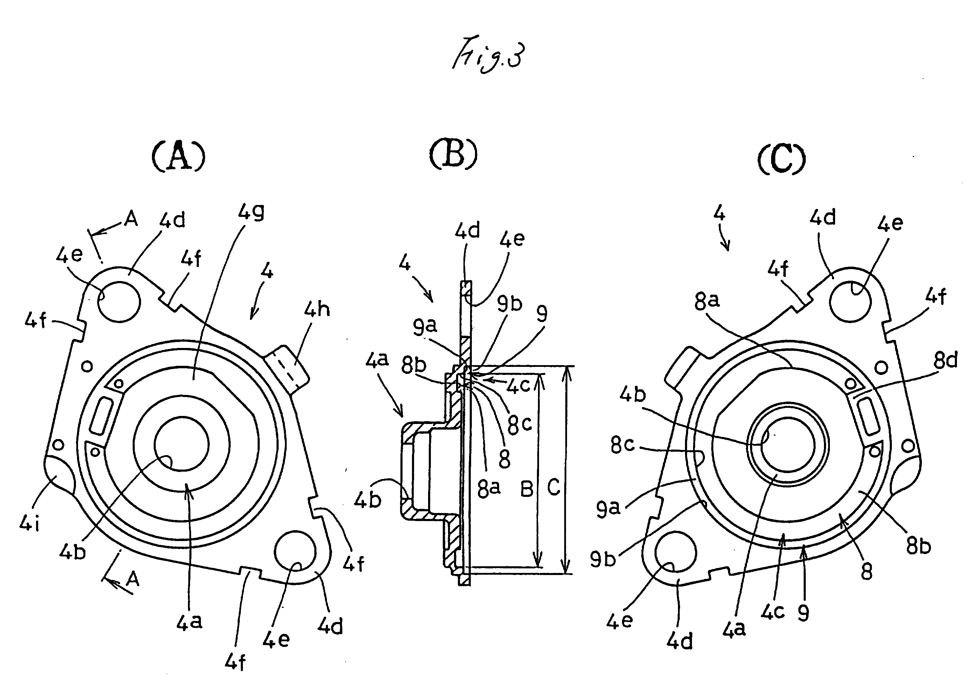

Figures 3 (A), (B), and (C) are a front view, a sectional view at the line A-A of Fig. 3 (A), and a rear view, respectively, of a front bracket ;

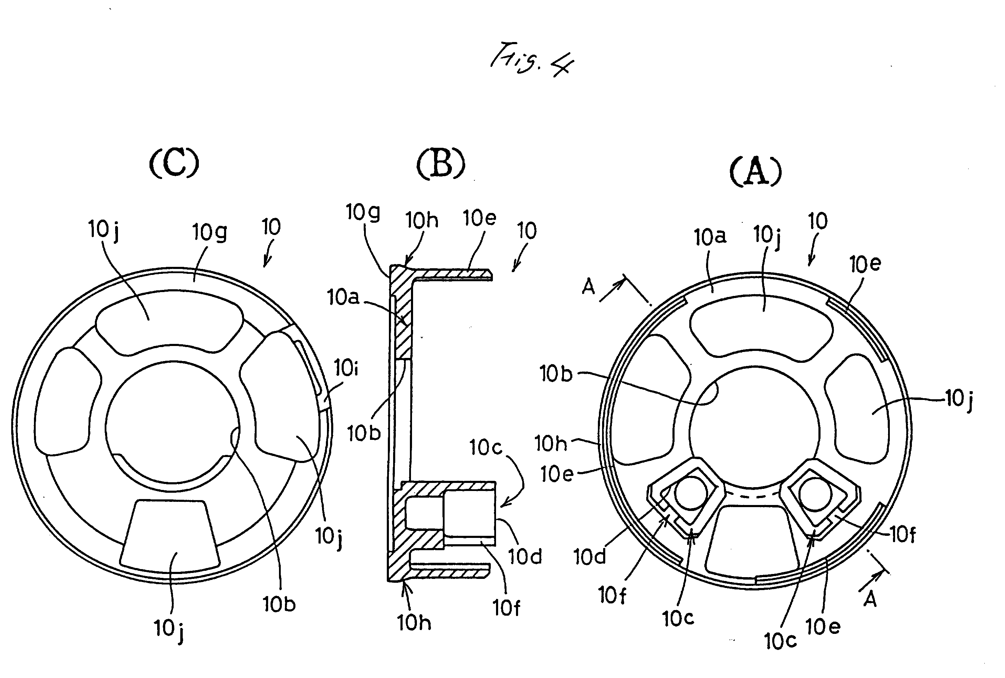

Figures 4 (A), (B), and (C) are a front view, a sectional view at the line A-A of Fig. 4 (A), and a rear view, respectively, of a brush holder ;

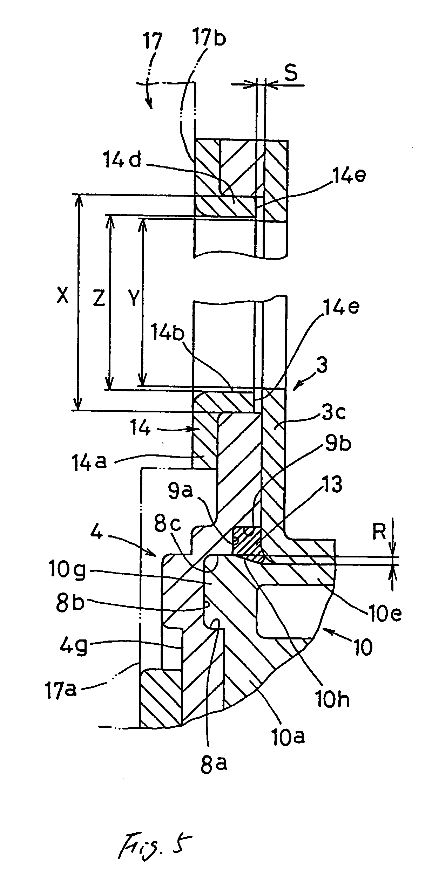

Figure 5 is an exaggerated sectional view of an essential section ;

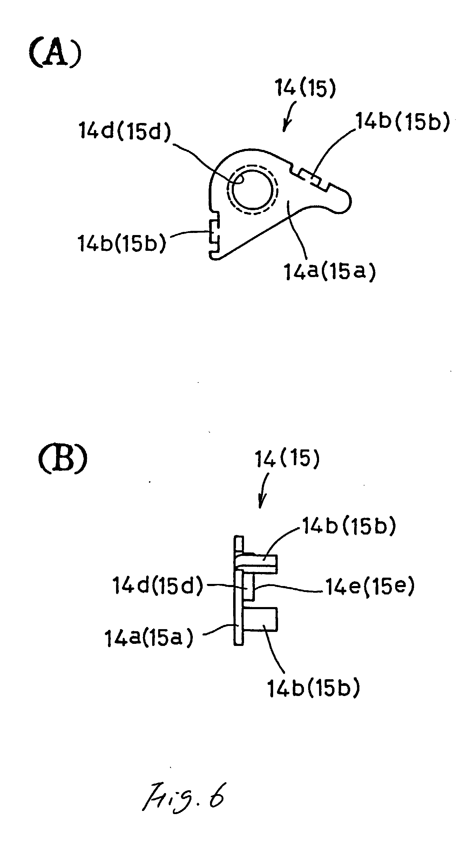

Figures 6 (A) and (B) are a front view and a side view, respectively, of a retaining metal fixture ; and
Figures 7 (A), (B), and (C) are a side sectional view, a front view, and an exaggerated sectional view of an essential section, respectively, showing a conventional example.

In the drawings, reference numeral 1 denotes a housing of an electric motor constituting electrical equipment; the housing 1 is comprised of a yoke 3 which has a permanent magnet 2 secured to its internal peripheral surface and which is formed to be a bottomed cylinder, and a front bracket 4 which covers an open end of the yoke 3. An armature shaft (output shaft) 5a constituting an armature 5 is rotatably supported in the housing 1 via bearings 6 and 6a. In the armature 5, the armature coil 5b is wound around an armature core secured to the armature shaft 5a, and a commutator 7 is integrally provided on an end surface (an end surface at one side) of an armature coil 5b at the front bracket 4 side. In other words, the commutator 7 in this embodiment is formed to be a plane commutator disposed in a plane shape on an end surface of the armature coil 5b. A plurality of commutator segments 7a are radially arranged in relation to the armature shaft 5a and the sliding-contact surfaces thereof are oriented toward one side.

The yoke 3 is formed to be a bottomed cylinder having an inside diameter A, and a bearing 3b projecting toward the other side is formed on a bottom surface 3a. The other end of the armature shaft 5a is supported in the bearing 3b via the bearing 6a. Integrally formed on the opening end portion of the yoke 3 is a flange 3c which is bent to diverge toward the outside diameter thereof. A pair of mounting tabs 3d are integrally formed on the outside diameter side of the flange 3c, and they are respectively provided with through holes 3e in which bolts 16 to be discussed later are inserted.

The front bracket 4 is made by press-forming a metal plate, and a bearing section 4a jutting out toward one side is formed at the center thereof by drawing, the bearing 6 being internally installed therein. The projection end surface of the bearing section 4a is provided with a through hole 4b. One end of the armature shaft 5a is supported by the bearing section 4a via the bearing 6 in such a manner that it juts out of the through hole 4b. Further, an annular recession 4c that is stepped in depth is provided by hammering in the inner surface (the other surface) of the front bracket 4. The recession 4c is composed of a first recession 8 which is deep and which has an inner peripheral surface 8a, a bottom surface 8b, and an outer peripheral surface 8c, and a second recession 9 which is shallow and which has a bottom surface 9a continuing to the outer peripheral surface 8c of the first recession and an outer peripheral surface 9b. An outside diameter B (the diameter which is set by the outer peripheral surface 8c of the first recession and which corresponds to the inside diameter of the second recession 9) of the first recession 8 is set to be smaller than an outside diameter C (the diameter set by the outer peripheral surface 9b of the second recession) of the second recession 9 (B < C); it is also set to be larger than an inside diameter A of the yoke 3 (A<B) so that a dimensional difference R is set between the outside diameter B of the first recession and the inside diameter A of the yoke.

A pair of mounting tabs 4d opposed to the yoke mounting tabs 3d are integrally formed at the outside diameter side of the second recession 9 in the front bracket 4, through holes 4e for mounting the body that are communicated with the yoke through holes 3e being provided in the mounting tabs 4d. Further, as it will be discussed later, positioning and assembling these mounting tabs 4d and 3d so that they are opposed to each other allows the yoke 3 and the front bracket 4 to be positioned circumferentially.

Reference numeral 10 indicates a brush holder that has been molded into one piece using a resin material, and the brush holder 10 is assembled to cover the opening of the yoke 3. A through hole 10b in which the armature shaft 5a is inserted is provided at the center of a discoid proximal end portion 10a. A pair of brush housings 10c, in which a brush 11 is contained in such a manner that it can move in the axial direction, is formed such that they jut out and adjoin each other in the circumferential direction on a surface opposed to the yoke bottom surface 3a (the other side surface) in the brush holder proximal end portion 10a. These brush housings 10c are provided with openings 10d at the projecting end surface facing the other side, and the other end of the brush 11 urged by an urging device 12 juts out of the openings 10d.

Further, engaging portions 10e, whose dimensions have been set to allow them internally and slidably fit in the yoke 3 having the inside diameter A, are formed so that they project from the outer periphery of the other side surface of the brush holder 10. The engaging portions 10e are formed with circumferential spaces provided therebetween and their axial projecting lengths are set to be approximately equal to or slightly shorter than the axial projecting lengths of the brush housings 10c. The engaging portions 10e located adjacently opposed to the brush housings 10c are formed in the direction in which pig tails 11a are drawn out (in the circumferential direction) so as to prevent (insulate) the pigtails 11a drawn out of the brush 11 from touching the metallic yoke 3.

Reference numeral 10f denotes draw-out grooves for drawing out the pigtails 11a, the grooves being formed in the portions on the outside diameter sides of the respective brush housings 10c.

Formed on the surface (one surface), which is opposed to the front bracket 4, in the brush holder proximal end portion 10a is an annular protuberance 10g having its dimensions set so that it internally fits in the first recession 8 of the front bracket having the outside diameter B. The dimension of the inside diameter of the protuberance 10g has been set to snugly fit in the inner peripheral surface of the first recession 8 of the front bracket. The outer peripheral surface between the brush holder proximal end portion 10a and the engaging portions 10e is formed into a slope portion 10h such that the outside diameter thereof changes by the dimension corresponding to the dimensional difference R.

The brush holder 10 and the front bracket 4 are aligned by spigot-engaging the inside diameter surface of the brush holder protuberance 10g with the inner peripheral surface of the first recession 8 of the bracket. In this engaged state, the slope portion 10h that continues to the brush holder proximal portion 10a is opposed to the second recession 9, a space surrounded by the bottom surface 9a of the second recession and the outer peripheral surface 9b of the second recession is formed on the outside diameter side of the slope portion 10h, and a sealing member 13 made of a gum elastic material or the like is installed in the space.

A shallow stepped portion 8d is formed to project circumferentially at a predetermined location on the bottom surface of the first recession 8. The brush holder protuberance 10g is provided with a notch 10i that engages with the stepped portion 8d to circumferentially position or stop the brush holder 10 with respect to the front bracket 4 of the brush holder 10. Further, a plurality of through holes 10j that are open axially are provided in the brush holder proximal end portion 10a in the circumferential direction, and the pigtails 11a drawn out of the brush 11 via the through holes 10j are pulled out toward the front bracket 4. One of the pigtails 11a is connected to a connecting terminal 11b provided in an insulated fashion on the front bracket, while the other is directly connected to the front bracket 4 to enhance the grounding reliability. At this time, the other pigtail 11a is pulled out via the through hole 10j of the brush holder 10 and spot-welded to the bottom surface 8b of the first recession.

When installing the yoke 3 from the axial direction to the front bracket 4 in which the brush holder 10 has been installed, the brush holder engaging portions 10e are slidably fitted (spigot-engaged) to the inner peripheral surface of the yoke 3 so as to align the front bracket 4 and the yoke 3. This allows the front bracket 4, the brush holder 10, and the yoke 3 to be assembled in alignment. In this assembled state, the pairs of the mounting tabs 4d and the mounting tabs 3d circumferentially arranged are abutted against each other such that the through holes 4e and 3e are communicated with each other as described above, thereby to circumferentially position the front bracket 4 and the yoke 3. Securing the mounting tabs 4d and 3d together causes the projecting sealing member 13 to be elastically deformed by being elastically pressed by the end surface on the inside diameter side of the yoke flange 3c so as to seal the housing 1 and to cause the sealing member 13, which has been elastically deformed, to be elastically pressed against the slope portion 10h of the brush holder 10 thereby to fix the brush holder 10 by clamping it between the front bracket 4 and the yoke 3 so that it does not slip off. The electric motor is shipped out of a factory with the housing 1 thereof temporarily fixed as it will be discussed later. The housing 1 is designed to be secured by securing the temporarily fixed electric motor to a body via the mounting tabs 4d and 3d.

More specifically, the electric motor is temporarily fixed by installing retaining metal fixtures (joint plates) 14 and 15 in accordance with the present invention to the pairs of the mounting tabs 4d and 3d arranged circumferentially in the aforesaid assembled state.

Incidentally, the pairs of the mounting tabs 4d and 3d arranged circumferentially are provided with pairs of engagement notches 4f and 3f which are positioned slightly away from the through holes 4e and 3e in the outer peripheral edge portion and which engage with the retaining metal fixtures 14 and 15. The commonality of the retaining metal fixtures 14 and 15 can be achieved by forming these mounting tabs 4d and 3d to share the same configurations.

The retaining metal fixtures 14 and 15 are respectively formed by main bodies 14a and 15a that are abutted against one side surface of the mounting tab 4d of the front bracket, and engaging portions (engaging hooks) 14b and 15b which are formed on the outer peripheral edge portions of the main bodies 14a and 15a and which jut out toward the yoke 3 to engage with the engagement notches 4f and 3f. The retaining metal fixtures 14 and 15 are adapted to temporarily fix the front bracket 4 and the yoke 3 together by engaging the engaging portions 14b and 15b with the engagement notches 4f and 3f and crimping their distal ends, which jut out toward the yoke mounting tab 3d, at the yoke 3 side. In the temporarily fixed state, crimped surfaces 14c and 15c of the engaging portions 14b and 15b, respectively, are positioned away from the area around the yoke through holes 3e so that the crimped surfaces 14c and 15c do not interfere with bolt heads 16a inserted from the side of the yoke through holes 3e to install the assembly to the body as will be discussed later.

Further, bosses 14d and 15d, which are fitted in the through holes 4e of the front bracket, are formed by burring on the retaining metal fixtures 14 and 15, respectively. Distal end surfaces 14e and 15e of the bosses 14d and 15d are adjacently opposed to the hole peripheral edges of the yoke through holes 3e with a predetermined gap (interval) S in the state where the retaining metal fixtures 14 and 15 are temporarily fixed. A hole diameter X of the front bracket through holes 4e is formed to be larger than a hole diameter Y of the yoke through hole 3e (X>Y), and an inside diameter Z of the bosses 14d and 15d fitted in the front bracket through holes 4e is formed to be larger than the hole diameter Y of the yoke through holes 3e (Z>Y) so that the bosses 14d and 15d do not interfere with bolts 16 inserted from the side of the yoke through holes 3e.

The retaining metal fixtures 14 and 15 are installed to an assembly in which the mounting tabs 4d and 3d of the front bracket 4 and the yoke 3 have been positioned. At this time, the bosses 14d and 15d of the retaining metal fixtures are fitted in the front bracket through holes 4e and the pairs of the engaging portions 14b and 15b on the outside diameter side engage with the engagement notches 4f and 3f thereby to permit positive, accurate positioning of the front bracket 4 and the yoke 3.

To mount the electric motor in the temporarily fixed state, which has been shipped from a factory, on a body bracket 17 of an actuator, the front bracket 4 is opposed to and attached to the body bracket 17. The body bracket 17 is provided with first and second abutting surfaces 17a and 17b, respectively, that are stepped in the direction of the armature shaft 5a of the electric motor so as to support the electric motor in the axial direction in steps. On the other hand, the recession 4c is formed in the outer surface of the front bracket 4 so as to form a concave groove 4g positioned at outer periphery of the bearing section 4a, a gasket 18 being installed in the concave groove 4g. The electric motor can be secured to the body bracket 17 by abutting the gasket 18 against a first abutting surface 17a and abutting one side surfaces of the retaining metal fixtures 14 and 15 for temporarily fixing the mounting tabs 4d and 3d against a second abutting surface 17b, then screwing the bolts 16, which have been inserted from the yoke 3 side, to the second abutting surface 17b via the yoke through holes 3e and the bosses 14d and 15d. At this time, the front bracket 4 and the yoke 3 are placed in a secured state by tightening the bolts 16 in which they are able to survive the vibration produced in an operating environment.

Further, integrally formed on the outer surface of the front bracket 4, i.e. the surface facing the body bracket 17, are projecting surface portions 4h and 4i that jut out to be flush with the retaining metal fixtures 14 and 15 installed on the mounting tab 4d. At the time of installation to the body bracket 17, the projecting surface portions 4h and 4i are abutted, together with one side surfaces of the retaining metal fixtures 14 and 15, against the second abutting surface 17b. Thus, abutting the four portions against the second abutting surface 17b prevents the play from being left in the electric motor. The positions where the projecting surface portions 4h and 4i are formed are decided according to the configuration of the body bracket 17, and they are obviously not limited to those in this embodiment.

In the embodiment of the present invention constructed as described above, the electric motor can be placed in the temporarily fixed state by crimping the retaining metal fixtures 14 and 15 onto the front bracket mounting tab 4d and the yoke mounting tab 3d in a state where the brush holder 10 and other necessary components have been installed in the housing 1 composed of the yoke 3 and the front bracket 4. The electric motor in the temporarily fixed state is moved to a site where an actuator to which the electric motor is to be mounted is located, and it is attached to the body bracket 17 of the actuator at the site. At this time, the assembled state is not ruined during transport or the like since the electric motor is temporarily fixed by the retaining metal fixtures 14 and 15. When mounting the electric motor on the body, the mounting tabs 4d and 3d to which the retaining metal fixtures 14 and 15 have been attached are used also as the mounting tabs for installation to the body, so that the front bracket 4 and the yoke 3 can be attached and fixed to the body by fastening them using the bolts 16. As a result, it is no longer necessary to provide the front bracket 4 and the yoke 3 with the two types of mounting portions, namely, one for the installation to the housing and the other for the installation to the body; instead, one type of the mounting tabs 4d and 3d is used for both purposes, permitting a compact design of the assembly. Moreover, the front bracket 4 and the yoke 3 that are temporarily fixed can be fastened to be securely fixed by tightening the bolts.

In this case, the bolts 16 for fastening the retaining metal fixtures 14 and 15, the front bracket 4, and the yoke 3 are inserted from the yoke mounting tab 3d side; the crimped surface portions 14c and 15c of the retaining metal fixtures crimped at the yoke 3 side are crimped at positions away from the bolt penetrating portions in the mounting tab 3d. Hence, the bolt heads 16a do not interfere with the crimped surface portions 14c and 15c, enabling positive fastening without play to be achieved.

Furthermore, although the bosses 14d and 15d of the retaining metal fixtures 14 and 15 are fitted in the front bracket through holes 4e, the distal end surfaces 14e and 15e are spaced away from the hole peripheral edges of the yoke through holes 3e with the gap S provided therebetween; hence, there should be no problem in that the bosses 14d and 15d hit the hole peripheral edges of the yoke 3 to damage the fastening of the front bracket 4 and the yoke 3 when fastening the retaining metal fixtures 14 and 15 and the mounting tabs 4d and 3d at the same time. In other words, the front bracket 4 and the yoke 3 are directly clamped between the bolt heads 16a and the body bracket 17 via the main bodies 14a and 15a of the retaining metal fixtures 14 and 15, and the securing strength of the front bracket 4 and the yoke 3 is obtained by the fastening strength of the bolts 16 independently of the fixed state of the temporary fixation, thus making it possible to maintain a stable fastened state over an extended period of time.

Furthermore, in the case mentioned above, the front bracket 4 and the yoke 3 can be placed in the fixed state by fastening to attach the mounting tabs 4d and 3d to the body; hence, the front bracket 4 and the yoke 3 may be left in the temporarily fixed state until they are installed on the body. This is advantageous in that such work as disassembly and re-assembly in the stage preceding the installation can be carried out more easily.

## Claims

1. A housing of an electric motor comprising a cylindrical yoke (3) and a front bracket (4) abutted against a flange (3c) formed at an opening end portion of the yoke(3), characterized in that through holes (3e,4e)are provided in mounting tabs (3d,4d) formed on said flange (3c) and on said front bracket (4) such that they are abutted and opposed against each other, in that a retaining metal fixture (14,15) is applied to said mounting tab (4d) of the front bracket (4), a locking portion (14b,15b) which projects from the retaining metal fixtures (14,15) being crimped at the mounting tab (3d) of the yoke (3) to temporarily fix both mounting tabs (3d,4d), and in that said mounting tabs (3d,4d) are secured by bolts (16) to a body (17) with the retaining metal fixture (14,15) located between the temporarily fixed mounting tabs (3d,4d) and the body (17) thereby fastening the housing to the body (17) via the bolts (16) inserted in the through holes (3e,4e) from a yoke side.

2. A housing of an electric motor according to claim 1, characterized in that the locking portion (14b,15b) is crimped at a location which is free of heads (16a) of the bolts (16) inserted in the through holes (3e,4e).

3. A housing of an electric motor according to claim 1 or 2, characterized in that the retaining metal fixture (14,15) is provided with a cylindrical boss (14d,15d) fitted in the through hole (4e) of the mounting tab (4d) of the front bracket (4), the inner diameter of said boss (14d,15d) being larger than the diameter of the through hole (3e) of the mounting tab (3d) of the yoke (3), and a distal end surface of said boss (14d,15d) being formed such that it is opposed to the outer peripheral edge of the yoke through hole (3e), a predetermined distance being provided therebetween.

4. A housing of an electric motor according to any of claims 1 to 3, characterized in that at least one protuberance is formed on the front bracket (4), said protuberance being nearly flush with the retaining metal fixture (14,15) installed to the mounting tab (4d).
